# EUROPEAN PATENT APPLICATION

(11) **EP 3 800 108 A1**
(43) Date of publication of application: **07.04.2021**
(21) Application number: 19201184.9
(22) Date of filing: 02.10.2019
(51) Int. Cl.: B62D 1/06, B62D 1/10

(54) **STEERING WHEEL WITH A STORAGE AND STEERING CONFIGURATION**

(71) Applicant: NIO (Anhui) Holding Co., Ltd., Hefei City, Anhui Province (CN)
(72) Inventor: PAESEN, Jochen, Anting, Jiading, Shanghai (CN); CUEFF, Julien, Anting, Jiading, Shanghai (CN); FROMME, Philipp, Anting, Jiading, Shanghai (CN)
(74) Representative: Vossius & Partner Patentanwälte Rechtsanwälte mbB

(57) **Abstract**

The present invention relates to a steering wheel (10) for a motor vehicle, the steering wheel (10) comprising a hub (12) configured to be connected to a steering column of the motor vehicle and a rim (16) with a first and separate second rim segment connected to the hub (12),
wherein the steering wheel (10) is configured to be adjusted between a steering and a storage configuration,
wherein, in the steering configuration, the two separate rim segments (18, 20) form an essentially continuous rim (16), and
wherein, in the storage configuration, the second rim segment (20) is, in a view along an axis (38) of the steering column, arranged behind the first rim segment (18) so that the first and second rim segments (18, 20) at least partially, preferably completely, overlap in the view along the axis (38) of the steering column.

## Description

The present invention relates to a steering wheel for a motor vehicle being configured to be adjusted between a steering configuration and a storage configuration. The invention further relates to a method for adjusting a steering wheel of a motor vehicle between a storage configuration and a steering configuration. In addition, the invention also relates to a steering arrangement and to a motor vehicle.

Steering wheels that are adjustable between a storage configuration and a steering configuration may provide good comfort and handling for a driver during steering of the vehicle that is comparable to regular steering wheels while providing increased space for the driver or a person sitting in the driver's seat when the wheel is not used for steering the vehicle. For example, in the steering configuration, a steering wheel may be turned for directing the front wheels of the vehicle in the desired direction. In the storage configuration, the wheel may occupy less space or extend less into the passenger compartment of the vehicle.

WO 2018/224238 A1 describes a collapsible steering wheel. The mechanism for collapsing different segments of a rim of the steering wheel is similar to an umbrella and therefore rather complex. Further, the steering wheel even further extends into the passenger cabin in its collapsed configuration than in its deployed configuration. Such an extension may be considered as uncomfortable for a passenger sitting in front of the wheel and may also pose a safety hazard when the vehicle is still driving.

US 2014/0277896 A1 describes a steering wheel with a manual driving mode and an autonomous mode. Compared to the driving mode, a wheel rim is retracted from the driver along the steering column while a main body portion in the center stays in place. Further, the retracted rim may still block a view in a similar way to its extended position in the driving mode.

US 2018/0141581 A1 describes a steering apparatus that allows adjustment of the steering wheel position with a telescopic mechanism and an electric tilt mechanism. Such an adjustment only allows aligning the steering wheel to a driver's position, size and preferences. No two distinct configurations that may enhance comfort are described.

A task of the present invention is to provide an improved steering wheel with a steering configuration and a storage configuration, to provide an improved steering arrangement, to provide an improved motor vehicle and to provide an improved method for adjusting a steering wheel with a steering configuration and a storage configuration, in particular to mitigate or overcome problems existing in the art. Preferably, the present invention increases comfort when using a motor vehicle in an autonomous driving mode and overall safety.

According to the invention, this task is resolved by the subject-matter of the independent claims. Advantageous embodiments and expedient developments are detailed in the respective dependent claims, wherein advantageous embodiments and expedient developments of one aspect also constitute advantageous embodiments and expedient developments of other aspects.

A first aspect of the invention relates to a steering wheel for a motor vehicle, the steering wheel comprising a hub configured to be connected to a steering column of the motor vehicle and a rim connected to the hub. A driver may turn the wheel, in particular by handling the rim, to turn the steering column connected to the hub. With the turning of the wheel, the driver may control the driving direction of the vehicle. The hub may comprise components and structures for the attachment to the steering column, such as threads, one or more recesses and/or protrusions, clamps and/or clamping surfaces. The connection of the hub to the steering column may allow to align a steering column axis to a turning axis of the steering wheel, which may correspond to an axis of symmetry of the steering wheel, in particular its hub. Usually, the orientation of the steering column relative to the hub is predetermined by the design of the hub and can be unambiguously determined from the steering wheel, in particular its hub and/or symmetry. The steering column may also be understood as the bearing and/or shaft for supporting the steering wheel, in particular its hub. This may in particular be the case if the steering wheel is not mechanically connected to the wheels, for example in a car with a steer-by-wire system. The axis of the steering column is preferably coaxial or equal to an axis of rotation of the steering wheel for steering the vehicle.

The rim comprises at least a first and a separate second rim segment. Separate may mean, for example, that those two segments are not of unitary, one-piece construction and/or are also not fixed to each other, in particular permanently and/or directly.

The steering wheel is configured to be adjusted between a steering configuration and a storage configuration. Preferably, in the steering configuration, the two separate rim segments form an essentially continuous rim, in particular a ring-shaped and/or plane rim. Further preferably, in the storage configuration, the second rim segment is, in a view along an axis of the steering column, arranged adjacent to and/or behind the first rim segment so that the first and second rim segments at least partially, preferably completely, overlap in the view along the axis of the steering column. Adjacent may be indicate the the two rim segments as being arranged in close vicinity and/or touching at least with parts of the respective sides facing each other in the direction along the axis of the steering column.

Due to the described storage configuration, the steering wheel does not block a view through a windshield and/or on instruments in a dashboard not or at least less blocking than in the steering configuration. For example, with an upper half rotated out of the view, a person seated in the driver's seat may easily see and/or reach a screen in the dashboard. Further, more space may be made available to that person. In particular, the second rim segment may be stored away in a space between the first segment and the dashboard that is not reachable or only uncomfortably reachable for the person sitting in the driver seat. Valuable space directly accessible by the driver may be freed for his personal use. Simultaneously, in the steering configuration, the steering wheel is particular easy to handle by the driver due to the essentially continuous form of the rim.

The rim is preferably configured for gripping and/or handling the steering wheel. Usually, the plane of the rim is arranged perpendicular to the axis of the steering column for ease of steering. For example, the rim segment may be partially ring shaped, e.g. a rim segment is a segment of a ring. Such a ring does not necessarily has to be round but may also have other shapes, such as forming an oval or having partially curved and/or flat sides. In particular, a flat bottom of the steering wheel when aligned for straight driving may be beneficial in providing more leg room. The hub may comprise an air bag and one or more actuation elements, for example for a motor vehicle horn and/or for controlling other car functions and/or devices, such as a radio. Such actuation elements may also be arranged on the rim and/or spokes connecting the rim to the hub. Preferably, the hub is a central element between the rim segments. In particular, the hub may be arranged in a plane of symmetry of the steering wheel.

The rim segments may each be connected to the hub by one or more respective spokes. The spokes may extend perpendicular to the axis of the steering column or transversal, providing a distance between the hub and the rim in the direction along the axis of the steering column. In a simple case, the spokes may be configured as essentially straight bars or tubes.

Preferably, any connection may be a mechanical connection. In particular, the connection of the rim segments to the hub and/or the hub to the steering column may be a fixed connection, possibly a releasably fixed connection. For example, a connection may mean that two parts are screwed to each other, bonded and/or of uniform integral design. In particular, the connection of spokes to other parts may be mechanically fixed. However, any such connections may comprise additional types of connections, such as an electrical wiring for the actuating elements. Preferably, at least one of the rim segments may be moveably connected to the hub for adjusting the configuration of the wheel. Such a connection may be provided with a joint, such as a pivot joint, and/or a guide, which may allow, for example, translatory movement.

"Behind" and "in front" may be defined from a driver's perspective, i.e., the side facing a driver is the front and the opposite side is the back of the steering wheel and its components. Preferably, "behind" and "front" form a direction that additionally or alternatively reversely corresponds to a forward-backwards direction of a car, wherein a front of the steering wheel is facing in the backward direction of the car. Alternatively or additionally, the "back side" may also be defined as facing the dashboard when mounted to a motor vehicle and/or the "front side" as facing the passenger compartment in the vehicle and/or a driver' seat.

The axis of the steering column may correspond to an axis of the hub and/or an axis around which the steering wheel is rotated and/or turned to steer the motor vehicle. The axis of the steering column and the steering wheel and/or its hub may be coaxial to each other. The axis of the steering column may be recognizable on the steering wheel, in particular due to mounting elements and/or surfaces, such as bearings for attaching of the hub and the steering column to each other.

The motor vehicle may preferably be configured as a car. Usually, in the steering configuration, the end faces of the rim segments in a circumferential direction are facing each other, in particular being arranged adjacent to each other and/or touching. Preferably, for adjusting the steering wheel between the steering configuration and the storage configuration, only one of the rim segments is moved, in particular relative to the hub. Such a configuration may result in a particular simple design. However, also both of the rim segments may be moved relative to the hub for adjusting the steering wheel configuration. Preferably the two rim segments are not connected to each other, in particular not permanently, to allow easy adjustment between the configurations.

The storage configuration may also be referred to as a collapsed configuration and/or a configuration providing the passenger with more available interior space and/or a better view of a dashboard and/or a display.

The steering wheel may also comprise several separate rim segments, such as three, four or more segments. In the steering configuration, all segments may form the essentially continuous rim. Again, just one or several of these segments may be adjusted for changing the configuration of the steering wheel. For example, two or more segments may be moved to be arranged adjacent to each other and behind a "stationary segment", such that each of the moved segments overlap with the stationary segment in the view along the axis of the steering column. More parts may allow to provide a storage configuration that occupies less space in a circumferential direction radial to the hub in the storage configuration. Less components may require less space in a direction along the axis of the steering column in the storage configuration.

The steering wheel may also comprise a locking mechanism that blocks adjustment between the configuration in the steering configuration and/or the storage configuration, in particular by blocking movement of rim segments relative to the hub. Such a locking mechanism may increase safety and also allow secure steering with just handling the second rim segment or any other rim segment moveable for adjustment of the steering wheel configuration.

In the context of this document, the driver's seat may be defined as the seat facing the steering wheel and/or as the seat that allows handling the steering wheel at least in the steering configuration.

In a further preferred embodiment of the steering wheel, the second rim segment is configured to be first shifted into one direction essentially along the axis of the steering column and then rotated around the axis of the steering column or an axis essentially parallel to the axis of the steering column to adjust the steering wheel from the steering configuration into the storage configuration. The second rim segment may be shifted forward along the axis of the steering column, i.e. towards the driver seat of the vehicle. Preferably, the second rim segment is shifted backwards along the axis of the steering column, i.e. towards the dashboard of the car. Such an adjustment may allow a simple mechanism. Further, such an adjustment may avoid extending any rim segment beyond the limits, in particular radial limits, defined by the steering wheel in the steering configuration. In particular, any rim segment may be first moved away from a person in the driver's seat, in particular his limbs, during adjustment of the configuration of the steering wheel. Accordingly, adjustment of the configuration may be performed comfortably with a person present in the driver's seat. Adjustment from storage configuration into steering configuration may be in the reverse order. Shifting may be defined as a translatory movement. Shifting along the axis of the steering column may be a translatory movement of the second rim segment parallel to the axis of the steering column.

In a further preferred embodiment of the steering wheel, the whole steering wheel is configured to be moveable from a first position in the steering configuration to a second position in the storage configuration, in particular along the axis of the steering column and/or perpendicular to the axis of the steering column, preferably downwards or upward. Such movement may be understood as comprising also the hub and/or excluding relative movement of the parts of the steering wheel to each other. For example, the whole steering wheel is moved towards the dashboard for storage, thus freeing even more space in the passenger compartment. The downward and/or upward shift may be a shift together with the steering column and/or an angle adjustment of the steering column, as is usually also manually provided on non-autonomous cars for adjusting the steering wheel position relative to the driver. For example, an upward or downward movement in the steering configuration may also be used to adjust the steering wheel height to the height of the driver. Similar, a movement along the axis of the steering column in the steering configuration may be used to adjust the steering wheel distance to the position of the seat of the driver. However, by synchronizing such an adjustment with the configuration change, comfort in the driving configuration and the storage configuration is increased. Preferably, the position of the steering is adjusted simultaneously with or after adjustment of the second rim segment when adjusting the steering wheel between the steering configuration and storage configuration. The steering column may be moved together with the steering wheel, e.g. being retracted along its axis and/or tilted, in particular such that the steering wheel is moved closer to a dashboard of the car and/or away from a driver seat. Preferably, the steering wheel is configured to allow adjustment of the first position, in particular by a driver and/or manually. With a configurable first position, the spatial arrangement of the whole steering wheel may be adjusted to the driver's needs, in particular in the driving configuration.

In a further preferred embodiment of the steering wheel, in the storage configuration, the second rim segment faces a backside of the first rim segment with its front side. Such a design may result in a particular compact storage configuration and may also provide a lot of free space for the driver in front of the steering wheel. Preferably, the second rim segment is arranged as close as possible to the first rim segment in the direction of the axis of the steering column in the storage configuration without the respective sides of the rim segments facing in a direction essentially parallel to the axis of the steering column and/or facing towards each other actually touching and/or being in contact. This may avoid unwanted friction and/or wear between the two rim segments. Alternatively, the second rim segment and first rim segment touch each other in the storage configuration with their at least part of their respective sides facing in a direction essentially parallel to the axis of the steering column and/or facing towards each other. Such a configuration is especially compact. Preferably, the rim segments are moved away from each other to be non-touching previous to any rotation of the rim segments relative to each other.

In a further preferred embodiment of the steering wheel, the second rim segment is configured to be rotated by about an angle between 130° and 180° around the axis of the steering column for adjusting the steering wheel between the steering configuration and the storage configuration. In the case of a 180° rotation the configuration may result in a particular compact storage configuration and may also provide a lot of free space for the driver in front of the steering wheel. In particular, the overlap between two rim segments in a view along the axis of the steering column may be especially large, thus providing a view for the driver that is very unobstructed by the steering wheel.

In a further preferred embodiment of the steering wheel, the two rim segments constitute two halves of the rim, preferably the two halves being an upper half and a lower half, respectively, and/or preferably the two rim segments being essentially symmetrical to each other. Again, a very compact storage configuration may be achieved with a high degree of overlap, thus providing a very unobstructed view. Symmetrical rim segments may allow using identical or very similar parts, thus reducing overall costs. The upper and lower half may be defined in a mounted position on the steering column, preferably with the upper half being located on the upper side with the motor vehicle being steered in a straight line and/or the wheels facing straight forward. Upward and downward may be additionally or alternatively be defined by gravity. The rim segments may, for example, be symmetrically arranged with respect to a plane including the axis of the steering column in the steering configuration and/or with respect to a plane being transversal, in particular perpendicular, to the axis of the steering column in the storage configuration. Preferably, the second rim segment is the upper half segment. Accordingly, the second rim segment may be moved out of the way of a driver's view of the dashboard and its instrument and obstruction of a view through the front windshield may be reduced in the storage configuration.

In a further preferred embodiment of the steering wheel, the first rim segment is connected directly to the hub by at least one spoke. This connection may be mechanically fixed and/or rigid, meaning that the first rim segment may not be moved relatively to the hub. Preferably, the only connection of the first rim segment to the hub is by its respective spokes. Such a design may provide a simple and durable steering wheel.

In a further preferred embodiment of the steering wheel, the second rim segment is connected to a rotatable element, in particular a ring-shaped ring element, by at least one spoke, wherein the rotatable element is rotatably mounted to the hub and/or configured for being rotatably mounted to the steering column. Preferably, the second rim segment is directly connected to the rotatable element by its respective spoke. Such a design allows to provide a compact, simple and durable guiding mechanism for the second rim segment for adjustment of the configuration of the steering wheel. The rotation of the rotatable element is independent of the rotation of the hub around the steering column. The rotatable element may rotate relative to the hub. The rotatable element may rotate around the axis of the steering column for allowing adjustment of the second rim segment between its position in the steering configuration and in the storage configuration. Preferably, the rotatable element moves together with at least a rotational movement of the second rim segment. Preferably, the second rim segment is only connected to the rotatable element and/or supported only by its respective spokes. Preferably, the rotatable element may also be shifted along the steering column axis, in particular relative to the hub, to provide such a degree of freedom to the second rim segment for configuration adjustment as well.

Preferably, the at least one spoke of the second rim segment is connected to the rotatable element during an adjustment of the steering wheel between the steering configuration and optionally also in the storage configuration. Preferably, the at least one spoke is connected to the rotatable ring in the storage configuration. Further, the at least one spoke of the second rim segment may preferably not be connected to the hub during an adjustment of the steering wheel between the steering configuration and optionally also not in the storage configuration. This allows the second rim segment to rotate independently and relatively to the hub. In the steering configuration the spoke may be connected to the hub and additionally also to the rotatable element for fast configuration adjustment. However, in the steering configuration, the at least one spoke may also be disconnected from the rotatable element. For example, a form fit, such as a depression and/or protrusion in the hub and in the rotatable element may receive part of the spoke, depending on configuration. When moving the second rim segment between the two configurations, the depression in the hub and the depression in the rotatable element are preferably aligned, so that at least a part of the spoke may slide from one into the other when the second rim segment is shifted along the axis of the steering column. Alternatively, the spoke may be connected to both the hub and the rotatable element in the steering configuration and only to the rotatable element during the adjustment between both configurations, optionally also in the storage configuration. This provides simple mechanical means to synchronize rotation of the rotatable element and the hub in the steering configuration, also allowing easy disengagement of the spoke from the hub for adjusting the steering wheel into the storage configuration. Preferably, the hub stays immobile in the storage configuration and/or during autonomous driving, thus allowing for easy realignment of the respective depressions when adjusting the steering wheel back into the steering configuration. For that purpose, the steering wheel may be disconnected from a turning of wheels, for example with a clutch of the steering column and/or the steering wheel.

In particular, both the hub and the rotatable element each may comprise form-fitting structures for an engagement to the at least one spoke of the second rim segment that transversely arranged to each other. For example, a groove in the hub may extend at an angle to a groove in the rotatable element. The transversal arrangement, in particular an angle in a major direction of extension, may result in the at least one spoke of the second rim segment to disengage from the hub when shifted but stay engaged to the rotatable element during the shift. For example, the groove in the rotatable element may be essentially arranged in parallel to a shifting direction while the groove in the hub is arranged transversal thereto.

In a further preferred embodiment of the steering wheel, a rotational movement of the rotatable element is blocked in the steering configuration, in particular relative to the hub. During steering, e.g. turning of the steering wheel, the rotatable element therefore preferably rotates together with the hub around the axis of the steering column. Additionally or alternatively, a shifting movement may be blocked as well. For the purpose of blocking, the steering wheel may, for example, comprise a locking mechanism, preferably arranged on the hub. Rotational movement is preferably unblocked in the storage configuration and/or after shifting the second rim segment backwards during adjustment from the steering configuration to the storage configuration. The blocking may provide easy and reliable means that allow using the second rim segment for steering in the steering configuration. Additionally or alternatively, movement may also be blocked in the storage configuration to avoid unwanted adjustment from the storage configuration into the steering configuration.

In a further preferred embodiment of the steering wheel, the at least one spoke of the second rim segment is engaged to a stop of the hub, in particular being at least partially received in, e.g., a depression in the hub, in the steering configuration, thus blocking rotational movement of the rotatable element, and wherein the at least one spoke of the second rim segment is disengaged from the stop of the hub, in particular being deallocated from the depression in the hub, in the storage configuration, thus unblocking rotational movement of the rotatable element. The depression may extend in a direction parallel to the respective at least one spoke of the second rim segment. The depression may be configured as a groove and/or conform in shape to the spoke. A groove is a particular simple and cost-effective form of a depression. A conformity with the shape of the spoke may provide a simple locking of the second rim segment that is essentially free of play. Engaged may be defined as a resting on at least one wall forming the depression. Other form-fitting engagements may also be possible. The stop may form a part of the above-described locking mechanism for the second rim segment that is especially simple and cost-effective. The releasing is preferably caused due to the backward shift of the second rim segment. Preferably the rotatable element is shifted backwards along the axis of the steering column for disengagement from the stop. An opening of the depression may thus at least partially face in such a direction.

In a further preferred embodiment of the steering wheel, the steering wheel comprises an actuator, such as an electric motor, for adjusting the steering wheel between the storage configuration and the steering configuration, in particular by moving the second rim segment and/or the rotatable element. Such an actuator may allow comfortable and in particular automatic adjustment of the steering wheel configuration. The actuator may be easily arranged radially within the rotatable element and/or hub, resulting in a compact packing of the steering wheel. The hub and/or rotatable element may provide a casing for the actuator for its protection, thus possibly rendering additional casing unnecessary.

In a further preferred embodiment of the steering wheel, the steering wheel is configured to be adjusted into the steering configuration in response to a change into a manual driving mode of the motor vehicle and into the storage configuration in response to a change into an autonomous driving mode of the motor vehicle, preferably by means of the above-described actuator. Such a design of the steering wheel allows to automatically provide the steering wheel configuration that is appropriate, in particular most comfortable, in the current mode of the vehicle. A manual driving mode may be any mode where the driver is required to steer the vehicle with the steering wheel and/or must be able to overrule autonomous steering commands by an autonomous driving device of the vehicle. For example, such overruling is usually required when the vehicle is at least partially controlled by a lane-keeping assistant. An autonomous driving mode may be any mode where the driver is not required to steer the vehicle with the steering wheel during a driving operation, in particular such a high-level autonomous control that the possibility to overrule autonomous steering commands by the autonomous driving device of the vehicle is not required anymore. In addition, the steering wheel may also be configured to be adjusted into the storage configuration in response to the vehicle being stopped and/or the engine being turned off. This allows a comfortable rest and easy entry into and exit from the driver's seat.

For the automatic adjustment, the steering wheel may comprise a control device for adjusting its configuration, an actuator configured for moving parts of the steering wheel, in particular at least the second rim segment, in response to a control signal provided by the control device for adjusting the steering wheel configuration and/or a sensor configured for detecting the driving mode of the vehicle. In a very simple example, such a sensor may be an electrical interface that allows the control device to receive a signal from an autonomous driving device of the motor vehicle indicating the current driving mode of the vehicle.

In the storage configuration, the steering wheel may be configured not to rotate around the axis of the steering column, in particular to a turning of the front wheels due to a steering command by the autonomous control device. This allows more compact storage and more freed passenger compartment space, in particular because the immobile steering wheel may rest on vehicle components such as the dashboard. Alternatively, the steering wheel may be configured to rotate around the axis of the steering column not only in the steering configuration but also the storage configuration, for example turning with the front wheels due to a steering command by the autonomous control device. This may provide the driver with visual feedback on the autonomous steering commands and increase his trust in such a system. The control unit may correspond to the above-described control device. The sensor may correspond to the above-described sensor or may, for example, be a processor or other device that handles an internal status indication or a sensor of the autonomous driving device.

A second aspect of the invention relates to a steering arrangement with the steering wheel according to the first aspect. Since the steering arrangement according to the second aspect comprises the steering wheel according to the first aspect, improvements, features and embodiments of the first aspect can be considered as examples and embodiments of the second aspect, and vice versa. The steering arrangement may further comprise the steering column of the motor vehicle, a sensor configured to detect the driving mode of the motor vehicle and/or a control unit configured for adjusting the configuration of the steering wheel, in particular in response to the detected driving mode.

A third aspect of the invention relates to a motor vehicle. The motor vehicle comprises the steering arrangement according to the second aspect and/or the steering wheel according to the first aspect. Since the motor vehicle according to the third aspect comprises the steering wheel according to the first aspect and/or the steering arrangement according to the second aspect, improvements, features and embodiments of the first aspect and second aspect can be considered as examples and embodiments of the third aspect, and vice versa. Preferably, the motor vehicle is being configured to be selectable driven in a manual driving mode and an autonomous mode. Further details and definitions of such driving modes may be found above. In particular, the motor vehicle may be configured to automatically adjust the steering wheel configuration in response to a selection of a driving mode.

In a further preferred embodiment, at least a part of the second rim segment is received in a depression of the interior of the motor vehicle in the storage configuration, in particular a depression in the dashboard. This may allow particular compact storage and also prevent unwanted rotation of the second rim segment in the storage configuration of the steering wheel. Preferably, the part of the second rim segment is arranged into the depression of the interior of the vehicle due to a shift of the hub and/or the steering column towards the dashboard, in particular along the axis of the steering column and/or after rotation and/or shifting of the second rim segment.

A fourth aspect of the invention relates to a method for adjusting a steering wheel of a motor vehicle between a storage configuration and a steering configuration. The steering wheel comprises a hub configured to be connected to a steering column of the motor vehicle and a rim connected to the hub, the rim comprising at least a first and a separate second rim segment. Preferably, the steering wheel is configured as the steering wheel according to the first aspect. Similar, the method may also be suitable to adjust the configuration of a steering wheel of the steering arrangement of the second aspect and/or to operate a motor vehicle according to the third aspect. Accordingly, improvements, features and embodiments of the first, second and third aspect can be considered as examples and embodiments of the fourth aspect, and vice versa.

In a preferred embodiment, the method comprises the step of arranging the two separate rim segments to form an essentially continuous rim, in particular a ring-shaped and/or plane rim, in the steering configuration. Further, the method also preferably comprises the step of moving at least one of the two rim segments, preferably by first shifting the second rim segment backwards along the axis of the steering column and then rotating the second rim segment around the axis of the steering column, so that the second rim segment, in a view along an axis of the steering column, is arranged adjacent to and behind the first rim segment in the storage configuration so that the first and second rim segments at least partially, preferably completely, overlap in the view along the axis of the steering column. Preferably, the method comprises detecting a currently selected driving mode of the vehicle and/or adjusting the configuration automatically in response to a selected driving mode of the vehicle. Alternatively or additionally, the adjustment may be performed in response to a change of driving mode, which may correspond to the selection of driving mode.

Other features of the technology will be apparent from consideration of the information contained in the above as well as in or in combination with the following detailed description, abstract, drawings and claims. The present technology is illustrated by way of example, and not by way of limitation, in the figures of the accompanying drawings, in which like reference numerals refer to similar elements including:
Fig. 1 illustrates in a schematic perspective view a steering wheel of a motor vehicle in its steering configuration.
Fig. 2 illustrates in a schematic perspective view the steering wheel according to Fig. 1 in its storage configuration.
Fig. 3 illustrates in a schematic perspective view the steering wheel according to Fig. 1 in its steering configuration from a back-side.
Fig. 4 illustrates schematically a method for adjusting the configuration of the steering wheel according to Fig. 1

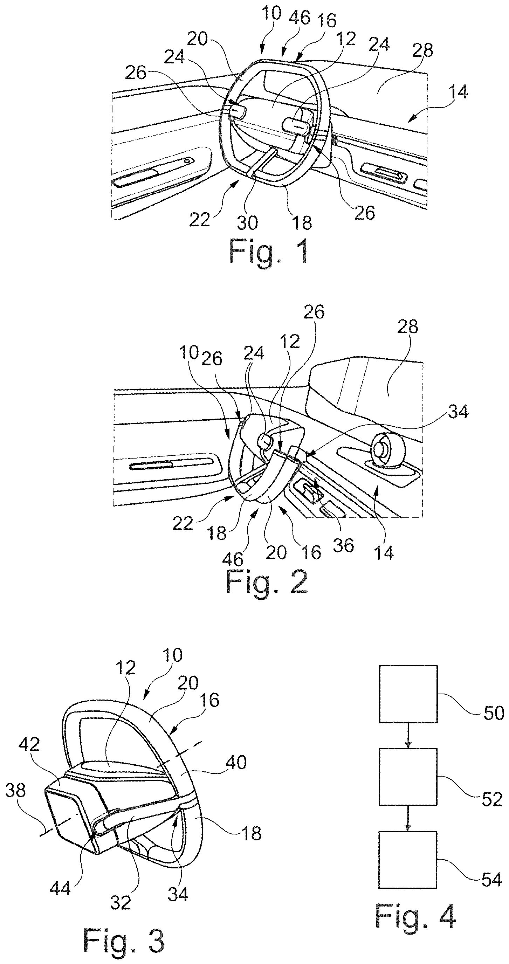

Fig. 1 shows in a schematic perspective front view a steering wheel 10 of a motor vehicle in a steering configuration. The steering wheel 10 comprises a central hub 12, which may be mounted to a steering column of the vehicle that may extend through or below a dashboard 14. The steering column may mechanically connect the steering wheel 10 to wheels of the vehicle, such as its front wheels. A turning of the steering wheel 10 may be transmitted to the wheels by the steering column. Alternatively, the steering column may, for example, only provide the bearing and/or shaft for rotatably supporting the steering wheel 10, in particular its hub 12. Especially in the case of a drive-by-wire system, the steering column may therefore have no mechanical connection to the wheels of the vehicle. Alternatively or additionally, the steering wheel 10 and/or the hub 12 may be functionally coupled to rotation sensors. This can allow steering wheel movement to be sensed and the respective sensed steering wheel movement information to be conveyed to structure(s) for changing an angle of the wheels of the vehicle.

The dashboard 14 comprises an instrument screen 28 arranged behind the steering wheel 10, which may be configured as a touchscreen or other form of display. Further, the steering wheel 10 comprises a rim 16 that is attached to the hub 12. A driver may grab the rim 16 to turn the steering wheel 10 around a central axis that corresponds to an axis of the steering column to control a direction into which the vehicle drives. In Fig. 1 a position of the steering wheel 10 is shown that results in the vehicle driving straight. The hub 12 comprises, e.g. two, actuation elements, for example allowing the driver to honk the horn. Further, an airbag may be integrated into the hub 12.

The rim 16 comprises a first rim segment 18 that constitutes a lower half of the rim 16 and a second rim segment 20 that constitutes an upper half of the rim 16. The two rim segments 18, 20 form an essentially continuous rim 16 in the steering configuration, wherein both rim segments 18, 20 are arranged in the same plane, are essentially symmetrically to each other and form a ring-shaped rim 16. The lower half of the rim 16 may have a flat section 22, e.g. to provide additional leg room for the driver. The shape of the rim 16 facilitates comfortable handling and steering. The rim 16 may have other shapes as well, such as forming a circular, elliptical, square or rectangular ring.

The first rim segment 18 is rigidly connected to the hub 12, here by a single central lower spoke 30. However, other configurations with other spoke positions and/or several spokes for the first rim segment 18 are also possible. The spoke 30 immobilizes the first rim segment 18 relative to the hub 12. The second rim segment 20 is also connected to the hub 12, here by means of two lateral spokes 32, one of which can be seen in the perspective back-view of Fig. 3. The spokes 30, 32 extend radially inward away from the driver and towards the dashboard 14.

As can be seen in Fig. 1, the two rim segments 18, 20 are two separate pieces. In a circumferential direction of the rim 16, the two end faces of each respective rim segment 18, 20 face each other in the steering configuration and may touch each other. However, at the split 26 in the rim 16, there may also be a small gap in the steering configuration between the two rim segments 18, 20.

While the steering wheel 10 in the steering configuration is comfortable to use for driving the vehicle, it may at least partially obstruct full view of the instrument screen 28 and/or through the windshield for the driver. This can also easily be seen in Fig. 1. Such a view restriction is acceptable during manual driving of the car, since handling comfort may be safety relevant and since only a limited amount of information needs to be displayed on the screen 28. However, if no manual steering is required, for example in an autonomous driving mode of the motor vehicle, the steering wheel 10 in the steering configuration might unnecessarily restrict the view of the driver and/or unnecessarily occupy space in front of the driver in the passenger compartment.

To overcome this, the steering wheel 10 may be adjusted into its storage configuration, which is shown in the perspective view of Fig. 2. As can be seen, in the storage configuration, the second rim segment 20 is, in a view along the axis of the steering column, arranged adjacent to and behind the first rim segment 18 so that the first and second rim segments 18, 20 at least partially, presently essentially completely, overlap in the view along the axis of the steering column. As a result, the steering wheel 10 in the storage configuration does not obstruct the view on the screen 28 anymore and occupies less space in the passenger compartment in front of the driver. As an example, the driver may thus unobstructedly enjoy a movie displayed on the screen 28 during autonomous driving with a very comfortable free space in front of him.

Preferably, the steering wheel 10, in its storage position, always takes a rotational position around the axis of the steering column that corresponds to the straight forward driving position described above. As a result, the flat section 22 of the first rim segment 18 is at the 6 o'clock position, providing increased leg room for the driver. Similar, the second rim segment 20 may be arranged in parallel and aligned with its identical shape to the first rim segment 18, such that a flat section 46 of the second rim segment 20 is similarly facing downward. Such a relative position of the two segments may also be referred to as a parallel or congruent position. Extension of the second rim segment 20 into the leg room of the driver can thus be avoided in the storage position.

To adjust the steering wheel 10 from its steering configuration to its storage configuration, the second rim segment 20 (the upper half of the rim 16) is shifted along the axis of the steering column away from the driver and towards the front of the car and its dashboard 14. Accordingly, the second rim segment 20 is shifted out of the plane of the rim 16 in the steering configuration. The ends of the two rim segments 18, 20 are thus not directly facing each other anymore. This allows gaining clearance for subsequently rotating the second rim segment 20 around the axis of the steering column, preferably by 180°. The second rim segment 20 is thus fitted behind the first rim segment 18, as shown in Fig. 2.

Preferably, the hub 12 and/or the steering column are moved additionally towards the dashboard 14, for example by telescopic retraction. This frees even more space in front of the driver. In addition, a protrusion 34 of the spoke 32 supporting the second rim segment 20 may thus be moved in a corresponding depression 36 in the dashboard 14. This may block rotation of the second rim segment 20, thus preventing unwanted rotation relative to the hub 12 and/or out of the steering configuration. Accordingly, there is no need for an additional locking mechanism in the storage configuration. Preferably, the depression 36 in the dashboard 14 has additional functions as well, such as being an outlet for a ventilation system of the car. In that case, costs can be low since no additional depression in the dashboard 14 must be manufactured. Additionally or alternatively, the hub 12 and/or the steering column may also be tilted perpendicular to the axis of the steering column, preferably upwards or downwards, to move toward the dashboard 14 and/or away from the driver. Preferably, shifting of the second rim segment 20 and/or its rotation is at least partially simultaneous to the movement of the hub 12 and/or steering column, resulting in a quick adjustment of steering wheel 10 configuration.

Fig. 3 illustrates an exemplary mechanical guidance of the second rim segment 20 in a back-view of the steering wheel 10 in its steering configuration. As can be seen, the spoke 32 of the second rim segment 20 is received in a depression of the hub 12, here configured as a groove 40, which corresponds in shape to the spoke 32. Alternatively, other constellations of a form-fit may be applied, such as protrusions. The spoke 32 thus rests on the walls of the groove 40 in the steering configuration, thus locking the second rim segment to the hub 12. This blocks unwanted relative rotation between the second rim segment 20 and the hub 12 and thus also minimizes play between the two rim segments 18, 20 in the steering configuration. The second rim segment 20 can thus be handled independently of the first rim segment 18 while still reliably turning the hub 12 and thus controlling driving direction. Accordingly, the spoke 32 is mechanically connected to the hub 12 in the steering configuration.

When the second rim segment 20 is shifted towards the dashboard 14 along the axis of the steering column, the spoke 32 also glides out of the groove 40. Accordingly, the locking of the second rim segment 20 is released, enabling the above-described rotation for moving the second rim segment in its storage position. Due to the spoke 32 and the groove 40 being inclined to a plane defined by the rim 16 and, the plane also as being perpendicular to the axis of the steering column, already a small shift of the second rim segment 20 allows release of the spoke 32 from the groove 40, resulting in a quick release and short required shifting distance. For example, the second rim segment 20 needs only to be shifted by a distance that is essentially equal to a thickness of the first rim segment 18.

Further, the steering wheel 10 comprises a rotatable element 42 that is rotatably supported around the axis of the steering column on the hub 12 and/or the steering column. The rotatable element 42 also comprises a depression in the shape of another groove 44. Both grooves 40 and 44 are aligned in the steering configuration since the spoke 32 is also received in both grooves 40, 44. When the second rim segment 20 is shifted towards the dashboard 14, the end of the spoke 32 distal the rim 16 slides in the groove 44 in that direction. The groove 44 thus provides both a guide for this movement as well as continued support for the second rim segment 20. Once the spoke 32 has fully disengaged from the groove 40 of the hub 12, the second rim segment 20 can be considered as only being connected to the rotatable element 42 while being disconnected from the hub 12 or as being connected indirectly to the hub 12 by the spoke 32 and the rotatable element 42. Rotation of the rotatable element 42 relative to the hub 12, which was previously blocked by the spoke 32, is thus unlocked. Accordingly, the second rim segment 20 may now be rotated around the axis of the steering column together with the rotatable element 42 independently of the hub 12. The second rim segment 20 may now be rotated in the position desired for the storage configuration of the steering wheel 10.

Fig. 3 illustrates the axis of the steering column as line 38.

Adjusting the steering wheel 10 may be manually performed or preferably by an actuator, such as an electric motor arranged inside the hub 12, inside the rotatable element 42, beneath the dashboard 14 and/or on the steering column. Adjusting of the steering wheel 10 has been described in the direction from the steering configuration into the storage configuration. Adjusting from the storage configuration into the steering configuration may be achieved, for example, moving the parts of the steering wheel 10 in the reverse direction in the reverse order. However, it may also be possible to, for example, rotate the second rim component 20 by 180° further in the same direction. Accordingly, reverse actuation by an actuator does not need to be implemented, possible resulting in a more cost-effective design.

In addition to the adjustment of the steering wheel 10 when selecting an autonomous driving mode, the screen 28 may also be configured to be adjusted between a steering configuration and a viewing configuration. For example, the screen 28 may be moved upward and/or tilted more towards the driver during autonomous driving so that a larger effective screen surface and/or a better view of the screen 28 is provided. In particular, the screen 28 may be moved more in front of the windshield of the vehicle. The screen 28 may also be referred to as a display.

Fig. 4 illustrates schematically a method for adjusting the steering wheel 10 between its configurations. In step 50, a driving mode of the vehicle is detected, preferably with a sensor. In step 52, a desired steering wheel 10 configuration in response to the detected driving mode is selected, preferably with the storage configuration corresponding to an autonomous driving mode and the steering configuration corresponding to a manual driving mode. In particular, the adjustment may be performed in response to a change of driving mode. Such a selection may be performed by a control device. Further, the position of the second rim segment 20 and optionally of the hub 12 is adjusted according to the desired configuration in step 54, preferably by an actuator such as an electric motor. The actuator is preferably controlled by the control device.

### REFERENCE SIGN LIST

- 10: steering wheel
- 12: hub
- 14: dashboard
- 16: rim
- 18: first rim segment
- 20: second rim segment
- 22: flat section of the first rim segment
- 24: actuation element
- 26: split in the rim
- 28: instrument screen
- 30: spoke for the first rim segment
- 32: spoke for the second rim segment
- 34: protrusion
- 36: depression
- 38: line illustrating an axis of a steering column
- 40: groove of the hub
- 42: rotatable element
- 44: groove of the rotatable element
- 46: flat section of the second rim segment
- 50: step
- 52: step
- 54: step

## Claims

1. Steering wheel (10) for a motor vehicle, the steering wheel (10) comprising a hub (12) configured to be connected to a steering column of the motor vehicle and a rim (16) connected to the hub (12), the rim (16) comprising at least a first and a separate second rim segment (18, 20),
wherein the steering wheel (10) is configured to be adjusted between a steering configuration and a storage configuration,
wherein, in the steering configuration, the two separate rim segments (18, 20) form an essentially continuous rim (16), in particular a ring-shaped and/or plane rim (16), and
wherein, in the storage configuration, the second rim segment (20) is, in a view along an axis (38) of the steering column, arranged behind the first rim segment (18) so that the first and second rim segments (18, 20) at least partially, preferably completely, overlap in the view along the axis (38) of the steering column.

2. Steering wheel (10) according to claim 1,
wherein the second rim segment (20) is configured to be first shifted in one direction essentially along the axis (38) of the steering column and then rotated around the axis (38) of the steering column or an axis essentially parallel to the axis (38) of the steering column to adjust the steering wheel (10) from the steering configuration into the storage configuration.

3. Steering wheel (10) according to claim 1 or 2,
wherein the whole steering wheel (10) is configured to be moveable from a first position in the steering configuration to a second position in the storage configuration, in particular along the axis (38) of the steering column and/or downwards or upward.

4. Steering wheel (10) according to any one of the previous claims,
wherein, in the storage configuration, the second rim segment (20) is facing, a backside of the first rim segment (18) with its front side.

5. Steering wheel (10) according to any one of the previous claims,
wherein the second rim segment (20) is configured to be rotated by about an angle between 130° and 180° around the axis (38) of the steering column for adjusting the steering wheel (10) between the steering configuration and the storage configuration.

6. Steering wheel (10) according to any one of the previous claims,
wherein the two rim segments (18, 20) constitute two halves of the rim (16), preferably the two halves being an upper half and a lower half, respectively, and/or preferably the two rim segments (18, 20) being essentially symmetrical to each other.

7. Steering wheel (10) according to any one of the previous claims,
wherein the first rim segment (18) is connected directly to the hub (12) by at least one spoke (30).

8. Steering wheel (10) according to any one of the previous claims,
wherein, at least during an adjustment of the steering wheel between the steering configuration and optionally in the storage configuration, the second rim segment (20) is connected to a rotatable element (42), in particular a ring-shaped ring element, by at least one spoke (32),
wherein the rotatable element (42) is mounted to be rotatable relative to the hub (12) and/or configured for being rotatably mounted to the steering column.

9. Steering wheel (10) according to claim 8,
wherein the rotational movement of the rotatable element (42) is blocked in the steering configuration.

10. Steering wheel (10) according to claim 9,
wherein the at least one spoke (32) of the second rim segment (20) is engaged to a stop of the hub (12), in particular being at least partially received in a depression (40) in the hub (12), in the steering configuration, thus blocking rotational movement of the rotatable element (42) relative to the hub (12), and
wherein the at least one spoke (32) of the second rim segment (20) is disengaged from the stop of the hub (12), in particular being deallocated from the depression (40) in the hub (12), in the storage configuration, thus unblocking rotational movement of the rotatable element (42).

11. Steering wheel (10) according to any one of the previous claims,
wherein the steering wheel (10) comprises an actuator for adjusting the steering wheel (10) between the storage configuration and the steering configuration, in particular by moving the second rim segment (20) and/or the rotatable element (42).

12. Steering wheel (10 according to any one of the previous claims,
wherein the steering wheel (10) is configured to be adjusted into the steering configuration in response to change into a manual driving mode of the motor vehicle and into the storage configuration in response to a change into an autonomous driving mode of the motor vehicle.

13. Steering arrangement with the steering wheel (10) according to any one of the previous claims, further comprising at least one of:
- the steering column of the motor vehicle;
- a sensor configured to detect the driving mode of the motor vehicle; and
- a control unit configured for adjusting the configuration of the steering wheel (10), in particular in response to the detected driving mode.

14. Motor vehicle comprising the steering arrangement according to claim 13 and/or the steering wheel (10) according to any one of the previous claims 1 to 12, the motor vehicle preferably being configured to be selectably driven in a manual driving mode or an autonomous driving mode.

15. Method to adjust a steering wheel (10) of a motor vehicle between a storage configuration and a steering configuration, the steering wheel (10) comprising a hub (12) configured to be connected to a steering column of the motor vehicle and a rim (16) connected to the hub (12), the rim (16) comprising at least a first and a separate second rim segment (18, 20), in particular the steering wheel (10) being configured as the steering wheel (10) according to previous claims 1 to 12, the method comprising the steps of:
- arranging the two separate rim segments (18, 20) to form an essentially continuous rim (16), in particular a ring-shaped and/or plane rim (16), in the steering configuration; and
- moving at least one of the two rim segments (18, 20), preferably by first shifting the second rim segment (20) backwards along an axis (38) of the steering column and then rotating the second rim segment (20) around the axis (38) of the steering column, so that the second rim segment (20), in a view along the axis (38) of the steering column, is arranged adjacent to and behind the first rim segment (18) in the storage configuration so that the first and second rim segments (18, 20) at least partially, preferably completely, overlap in the view along the axis (38) of the steering column.
